(19) Europäisches Patentamt
European Patent Office
Office européen des brevets

(11) **EP 1 943 694 B1**

(12) **EUROPEAN PATENT SPECIFICATION**

(45) Date of publication and mention
of the grant of the patent:
**12.10.2011 Bulletin 2011/41**

(21) Application number: **06802475.1**

(22) Date of filing: **28.08.2006**

(51) Int Cl.:
*H01M 8/04* (2006.01)     *H01M 8/10* (2006.01)

(86) International application number:
**PCT/US2006/033532**

(87) International publication number:
**WO 2007/040869 (12.04.2007 Gazette 2007/15)**

(54) **DIRECT OXIDATION FUEL CELL SYSTEMS WITH REGULATED FUEL CELL STACK AND LIQUID-GAS SEPARATOR TEMPERATURES**

DIREKTOXIDATIONS-BRENNSTOFFZELLENSYSTEME MIT GEREGELTEN BRENNSTOFFZELLEN- UND WASSERABSCHEIDERTEMPERATUREN

SYSTÈMES DE PILES À COMBUSTIBLE À OXYDATION DIRECTE AVEC DES TEMPÉRATURES DE PILES À COMBUSTIBLE ET DE SÉPARATEUR LIQUIDE/GAZ RÉGULÉES

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.10.2005 US 242908**

(43) Date of publication of application:
**16.07.2008 Bulletin 2008/29**

(73) Proprietors:
• **Panasonic Corporation**
  **Kadoma-shi**
  **Osaka 571-8501 (JP)**
• **THE PENN STATE RESEARCH FOUNDATION**
  **University Park, PA 16802 (US)**

(72) Inventors:
• **FUKUDA, Shinsuke**
  **c/o Matsushita Battery Industrial Co, Ltd.**
  **Osaka 570-8511 (JP)**
• **WANG, Chao-Yang**
  **State College, PA 16801 (US)**

(74) Representative: **Schwabe - Sandmair - Marx**
  **Patentanwälte**
  **Stuntzstraße 16**
  **81677 München (DE)**

(56) References cited:
WO-A2-2005/096420     DE-A1- 19 701 560
US-A1- 2005 008 924     US-A1- 2005 208 352

**Description**

FIELD OF THE DISCLOSURE

The present disclosure relates generally to fuel cells and fuel cell systems, and more particularly, to a direct oxidation fuel cell system according to claim1 that operate on highly concentrated fuel, e.g., methanol, and a method of operating such a system according to claim 6.

BACKGROUND OF THE DISCLOSURE

A direct oxidation fuel cell (DOFC) is an electrochemical device that generates electricity from electrochemical oxidation of a liquid fuel. DOFC's do not require a preliminary fuel processing stage; therefore they offer considerable weight and space advantages over indirect fuel cells, i.e., cells requiring preliminary fuel processing. Liquid fuels of interest include methanol ($CH_3OH$), formic acid, dimethyl ether (DME), etc., and their aqueous solutions. The oxidant may be substantially pure oxygen ($O_2$) or a dilute stream of oxygen, such as that in air. Significant advantages of employing a DOFC in portable and mobile applications (e.g., notebook computers, mobile phones, PDA's, etc.) include easy storage/handling and high energy density of the liquid fuel.

One example of a DOFC system is a direct methanol fuel cell (DMFC). A DMFC generally employs a membrane-electrode assembly (hereinafter "MEA") having an anode, a cathode, and a proton-conducting membrane electrolyte positioned therebetween. A typical example of a membrane electrolyte is one composed of a perfluorosulfonic acid - tetrafluorethylene copolymer, such as Nafion® (Nafion®is a registered trademark of E.I. Dupont de Nemours and Company). In a DMFC, a methanol/water solution is directly supplied to the anode as the fuel and air is supplied to the cathode as the oxidant. At the anode, the methanol ($CH_3OH$) reacts with the water ($H_2O$) in the presence of a catalyst, typically a Pt or Ru metal-based catalyst, to produce carbon dioxide ($CO_2$), protons ($H^+$ ions), and electrons ($e^-$). The electrochemical reaction is shown as equation (1) below:

$$CH_3OH + H_2O \rightarrow CO_2 + 6H^+ + 6e^- \qquad (1)$$

During operation of the DMFC, the protons migrate to the cathode through the proton-conducting membrane electrolyte, which is non-conductive to electrons. The electrons travel to the cathode through an external circuit for delivery of electrical power to a load device. At the cathode, the protons, electrons, and oxygen ($O_2$) molecules, typically derived from air, are combined to form water as the product. The electrochemical reaction is given in equation (2) below:

$$3/2 O_2 + 6H^+ + 6e^- \rightarrow 3H_2O \qquad (2)$$

Electrochemical reactions (1) and (2) form an overall cell reaction as shown in equation (3) below:

$$CH_3OH + 3/2 O_2 \rightarrow CO_2 + 2H_2O \qquad (3)$$

One drawback of a conventional DMFC is that the methanol partly permeates the membrane electrolyte from the anode to the cathode, such permeated methanol being termed "crossover methanol". The crossover methanol chemically (i.e., not electrochemically) reacts with oxygen at the cathode, causing a reduction in fuel utilization efficiency and cathode potential, with a corresponding reduction in power generation of the fuel cell. It is thus conventional for DMFC systems to use excessively dilute (3-6% by vol.) methanol solutions for the anode reaction in order to limit methanol crossover and its detrimental consequences. However, the problem with such a DMFC system is that it requires a significant amount of water to be carried in a portable system, thus diminishing the system energy density.

The ability to use highly concentrated fuel is desirable for portable power sources, particularly since DMFC technology is currently competing with advanced batteries, such as those based upon lithium-ion technology. However, even if the fuel cartridge with highly concentrated fuel (e.g., neat methanol) carries little to no water, the anodic reaction, i.e., equation (1), still requires one water molecule for each methanol molecule for complete electro-oxidation. Simultaneously, water is produced at the cathode via reduction of oxygen, i.e., equation (2). Therefore, in order to take full advantage of a fuel cell employing highly concentrated fuel, it would be desirable to: (a) maintain a net water balance in the cell where the total water loss from the cell (mainly through the cathode) preferably does not exceed the net production of water (i.e., two water molecules per each methanol molecule consumed according to equation (3)), and (b) transport some of the produced water from the cathode to anode.

Two approaches have been developed to meet the above-mentioned goals in order to directly use concentrated fuel. A first approach is an active water condensing and pumping system to recover cathode water vapor and return it to the anode (U.S. Patent 5,599,638). While this method achieves the goal of carrying concentrated (and even neat) methanol in the fuel cartridge, it suffers from a significant increase in system volume and parasitic power loss due to the need for a bulky condenser and its cooling/pumping accessories.

The second approach is a passive water return technique in which hydraulic pressure at the cathode is generated by including a highly hydrophobic microporous layer (MPL) in the cathode, and this pressure is utilized for driving water from the cathode to the anode through a thin membrane (Ren et al. and Pasaogullari & Wang, J. Electrochem. Soc., pp A399-A406, March, 2004). While this passive approach is efficient and does not incur parasitic power loss, the amount of water returned, and hence the concentration of methanol fuel, depends strongly on the cell temperature and power density. Presently, direct use of neat methanol is demonstrated only at or below 40°C and at low power density (less than 30 mW/cm$^2$). Considerably less concentrated methanol fuel is utilized in high power density (e.g., 60 mW/cm$^2$) systems at elevated temperatures, such as 60°C. In addition, the requirement for thin membranes in this method sacrifices fuel efficiency and operating cell voltage, thus resulting in lower total energy efficiency.

Thus, there is a prevailing need for a direct oxidation fuel cell system that automatically maintains a balance of water in the fuel cell and returns a sufficient amount of water from the cathode to the anode under high-power and elevated temperature operating conditions. There is an additional need for a direct oxidation fuel cell that operates with highly concentrated fuel, including neat methanol, and minimizes the need for an external water supply or condensation of electrochemically produced water.

In view of the foregoing, it is considered that measurement/knowledge of the temperatures of each of a MEA fuel cell stack and a L/G separator of a DMFC system are desirable for calculation of the air flow rate for obtaining a desired oxidant stoichiometric ratio according to equation (4) above. Therefore, provision of a DMFC system with suitable structure affording control of these temperatures would advantageously facilitate the air flow calculation and permit optimal fuel and space utilization. Accordingly, the present disclosure has been made with the aim of affording control of the MEA stack temperature and the liquid/gas separator temperature for providing a desired oxidant stoichiometry and optimal fuel utilization.

US 2005/0008924 A1 described a compact direct methanol fuel system (DMFC) based on modules. The DMFC system includes a DMFC stack and a number of modules for carbon dioxide separation, water management, mixing and methanol management, wherein the modules are not formed integrally with the DMFC stack.

From US 2005/0208352 A1, a fuel system is known having a fuel stack composed of one or more fuel cells. An anode-side radiator and a cathode-side radiator are provided separately from the fuel cell stack.

DE 197 01 560 C2 discloses a fuel cell system having an anode and a cathode chamber and a first and a second separator for separating liquid/gas mixture. Both separators are provided separately from the anode/cathode chamber.

WO 2005/096420 A2 describes a fuel cell system and a control method therefore, wherein the L/G separator is not formed integrally with the MEA stack but is connected to a pipe.

SUMMARY OF THE DISCLOSURE

An advantage of the present disclosure is improved direct oxidation fuel cell systems.

Another advantage of the present disclosure is improved direct oxidation fuel cell systems that operate on highly concentrated fuel.

Yet another advantage of the present disclosure is improved direct oxidation fuel cell systems with controlled amounts of recovered water and minimized liquid/gas (L/G) separator space.

Still another advantage of the present disclosure is improved direct oxidation fuel cell systems that operate with optimal current density and fuel utilization efficiencies.

A further advantage of the present disclosure is improved methods of operating direct oxidation fuel cell systems.

Additional advantages and other features of the present disclosure will be set forth in the description which follows and in part will become apparent to those having ordinary skill in the art upon examination of the following or may be learned from the practice of the present disclosure. The advantages may be realized and obtained as particularly pointed out in the appended claims.

According to the present invention, the foregoing and other advantages are achieved in part by an improved direct oxidation fuel cell system, comprising: the features of claim 1.

According to the invention, the thermal regulator comprises structure for maintaining the at least one MEA at a higher temperature than the L/G separator, as by maintaining the at least one MEA and the L/G separator in substantial thermal isolation, e.g., when a plurality of MEA assemblies are arranged in a stack, the L/G separator is mounted along a side of the stack, and the thermal isolator structure comprises a thermal isolator between the L/G separator and the stack, or when a plurality of MEA assemblies are arranged in a stack, the L/G separator is integrally formed with the stack, and the thermal isolator structure comprises at least one slit or trench extending through a portion of the stack.

Another aspect of the present invention is an improved method of operating a direct oxidation fuel cell comprising the features of claim 6.

According to the invention, the amount of liquid product recovered from the anode and cathode is controlled by the regulating temperature of the at least one MEA, and the method comprises providing a plurality of MEA assemblies in the form of a stack with the L/G separator housed in a portion of the stack, and developing a thermal gradient within the stack such that the portion of the stack housing the L/G separator is located in the lowest temperature zone of the stack.

Additional advantages of the present disclosure will become readily apparent to those skilled in this art from the following detailed description, wherein only the preferred embodiments of the present disclosure are shown and described, simply by way of illustration but not limitation. As will be realized, the disclosure is capable of other and different embodiments, and its several details are capable of modification in various obvious respects, all without departing from the spirit of the present invention. Accordingly, the drawings and description are to be regarded as illustrative in nature, and not as restrictive.

BRIEF DESCRIPTION OF THE DRAWINGS

In the following discription and figures, if embodiments are described which are not covered by the appended claims, these embodiments are only included for explanatory purposes.

The various features and advantages of the present disclosure will become more apparent and facilitated by reference to the accompanying drawings, provided for purposes of illustration only and not to limit the scope of the invention, wherein the various features are not necessarily drawn to scale but rather are drawn as to best illustrate the pertinent features, wherein:

FIG. 1 is a simplified schematic illustration of a direct oxidation fuel cell (DOFC) system capable of operating with highly concentrated methanol fuel;

FIG. 2 is a simplified perspective view of a portion of a DOFC system according to an embodiment of the present disclosure;

FIG. 3 is a simplified perspective view of a portion of a DOFC system according to another embodiment of the present disclosure; and

FIG. 4 is a simplified perspective view of a portion of a DOFC system according to yet another embodiment of the present disclosure.

DETAILED DESCRIPTION OF THE DISCLOSURE

The present disclosure relates to obtaining reliable calculation of the air flow rate for obtaining a desired oxidant stoichiometric ratio of direct oxidation fuel cells (DOFC) and DOFC systems, e.g., methanol-based DMFC systems such as described above, and for obtaining optimal fuel storage, water recovery, and electrical power output.

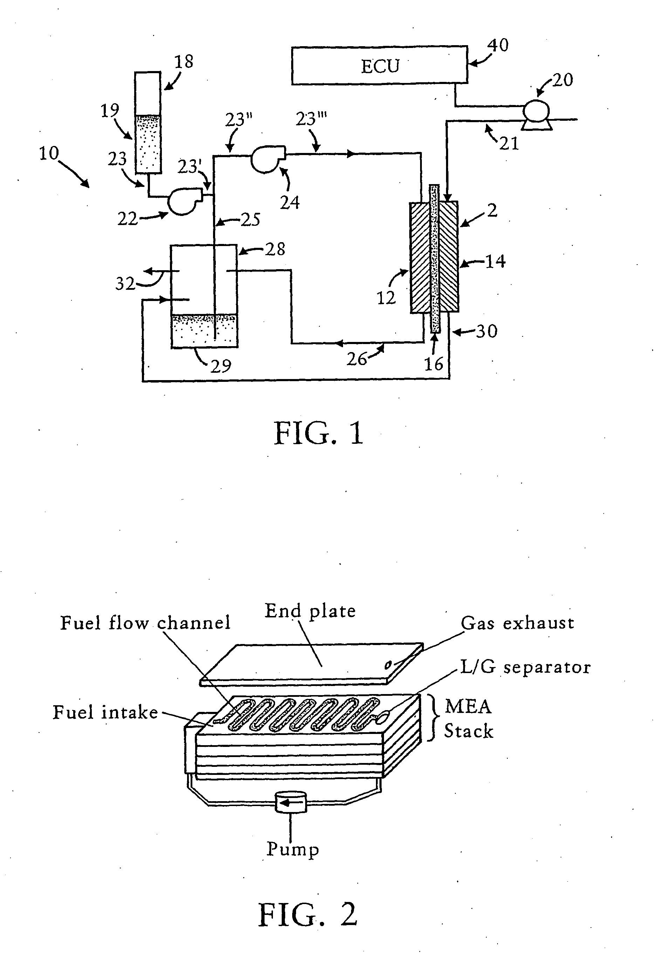

Referring to FIG. 1, schematically illustrated therein is an illustrative embodiment of a DOFC adapted for operating with highly concentrated fuel, e.g., a methanol-based DMFC system **10,** which system maintains a balance of water in the fuel cell and returns a sufficient amount of water from the cathode to the anode under high-power and elevated temperature operating conditions. (A DOFC and system is disclosed in co-pending, commonly assigned U.S. Patent Application Serial No. 11/020,306, filed Dec. 27, 2004).

As shown in FIG. 1, DMFC system **10** includes an anode **12,** a cathode **14,** and a proton-conducting electrolyte membrane **16,** forming a multi-layered composite membrane-electrode assembly or structure **2** commonly referred to as an MEA. Typically, a fuel cell system such as DMFC system **10** will have a plurality of such MEAs in the form of a stack; however, FIG. 1 shows only a single MEA for illustrative simplicity. Typically, the membrane-electrode assemblies **2** are separated by bipolar plates that have serpentine channels for supplying and returning fuel and by-products to and from the assemblies (not shown for illustrative convenience). In a fuel cell stack, MEAs and bipolar plates are aligned in alternating layers to form a stack of cells and the ends of the stack are sandwiched with current collector plates and electrical insulation plates, and the entire unit is secured with fastening structures. Not shown in FIG. 1, for illustrative simplicity, is a load circuit electrically connected to the anode **12** and cathode **14.**

A source of fuel, e.g., a fuel container or cartridge **18** containing a highly concentrated fuel **19** (e.g., methanol), is in fluid communication with anode **12** (as explained below). An oxidant, e.g., air supplied by fan **20** and associated conduit **21,** is in fluid communication with cathode **14.** The highly concentrated fuel from fuel cartridge **18** is fed directly into liquid/gas separator **28** by pump **22** via associated conduit segments **23'** and **25,** or directly to anode **12** via pumps **22** and **24** and associated conduit segments **23, 23', 23",** and **23'''** .

In operation, highly concentrated fuel **19** is introduced to the anode side of the MEA **2,** or in the case of a cell stack, to an inlet manifold of an anode separator of the stack. Water produced at the cathode **14** side of MEA **2** or cathode cell stack via electrochemical reaction (as expressed by equation (2)) is withdrawn therefrom via cathode exit port/conduit 30 and supplied to liquid/gas separator **28.** Similarly, excess fuel, water, and $CO_2$ gas are withdrawn from the anode side of the MEA **2** or anode cell stack via anode exit port/conduit **26** and supplied to liquid/gas separator **28.** The air or oxygen is introduced to the cathode side of the MEA 2 and regulated to maximize the amount of electrochemically produced water in liquid form while minimizing the amount of electrochemically produced water vapor, thereby minimizing the escape of water vapor from system **10**.

As indicated, during operation air is introduced to the cathode **14** (as explained above) and excess air and liquid water are withdrawn therefrom via cathode exit port/conduit **30** and supplied to the liquid/gas ("L/G") separator **28**. As discussed further below, the input air flow rate or air stoichiometry is controlled to maximize the amount of the liquid phase of the electrochemically produced water while minimizing the amount of the vapor phase of the electrochemically produced water. Control of the oxidant stoichiometry ratio can be obtained by setting the speed of fan **20** at a fixed rate depending on the fuel cell system operating conditions or by means of electronic control unit (ECU) **40,** e.g., a digital computer-based controller. ECU **40** receives an input signal from a $CO_2$ or $O_2$ gas sensor operatively connected to cathode exit port/conduit **30** and from a temperature sensor in contact with the liquid phase **29** of L/G separator **28** (each sensor not shown in the drawing for illustrative simplicity) and adjusts the oxidant stoichiometric ratio so as to maximize the liquid water phase in the cathode exhaust and minimize the water vapor phase in the exhaust, thereby minimizing the need for a water condenser to condense water vapor produced and exhausted from the cathode of the MEA **2**. In addition, ECU **40** can increase the oxidant stoichiometry beyond the minimum setting during cold-start in order to avoid excessive water accumulation in the cell.

Liquid water **29** which accumulates in the L/G separator **28** during operation may be returned to anode **12** via circulating pump **24** and conduit segments **25, 23",** and **23'''.** Exhaust carbon dioxide gas is released through port **32** of liquid/gas separator **28.**

As indicated above, cathode exhaust water, i.e., water which is electrochemically produced at the cathode during operation, is partitioned into liquid and gas phases, and the relative amounts of water in each phase are controlled mainly by temperature and air flow rate. The amount of liquid water can be maximized and the amount of water vapor minimized by using a sufficiently small oxidant flow rate or oxidant stoichiometry. As a consequence, liquid water from the cathode exhaust can be automatically trapped within the system, i.e., an external condenser is not required, and the liquid water can be combined in sufficient quantity with a highly concentrated fuel, e.g., greater than about 5 molar (M), for use in performing the anodic electrochemical reaction, thereby maximizing the concentration of fuel and storage capacity and minimizing the overall size of the system. The water can be recovered in an existing type of anode liquid/gas separator **28,** e.g., such as those typically used to separate $CO_2$ gas and aqueous methanol solution.

The direct oxidation fuel cell system **10** shown in FIG. 1 comprises at least one MEA **2** which includes a polymer electrolyte membrane **16** and a pair of electrodes (an anode **12** and a cathode **14**) each composed of a catalyst layer and a gas diffusion layer sandwiching the membrane. Typical polymer electrolyte materials include fluorinated polymers having perfluoro sulfonate groups or hydrocarbon polymers such as poly-(arylene ether ether ketone) ("PEEK"). The electrolyte membrane can be of any thickness as, for example, between about 25 and about 180 $\mu$m. The catalyst layer typically comprises platinum or ruthenium based metals, or alloys thereof. The anodes and cathodes are typically sandwiched by separator plates having channels to supply fuel to the anode and an oxidant to the cathode. A fuel cell can contain a plurality of such MEA's 2 with at least one electrically conductive separator placed between adjacent MEA's to electrically connect the MEAs in series with each other, and to provide mechanical support.

ECU **40** adjusts the oxidant flow rate or stoichiometric ratio so as to maximize the liquid water phase in the cathode exhaust and minimize the water vapor phase in the exhaust, thereby eliminating the need for a water condenser. ECU **40** adjusts the oxidant stoichiometric ratio according to a specific equation, illustratively equation (4) given below:

$$\xi_c = \frac{0.42(\gamma + 2)}{3\eta_{fuel}} \frac{p}{p_{sat}} \tag{4}$$

wherein $\xi_c$ is the oxidant stoichiometry, $\gamma$ is the ratio of water to fuel in the fuel supply, $p_{sat}$ is the water vapor saturation pressure corresponding to the cell temperature, $p$ is the cathode operating pressure, and $\eta_{fuel}$ is the fuel efficiency. Such controlled oxidant stoichiometry automatically ensures an appropriate water balance in the DMFC (i.e. enough water for the anode reaction) under any operating conditions. For instance, during start-up of a DMFC system, when the cell temperature increases from e.g., 20°C to the operating point of 60°C, the corresponding $p_{sat}$ is initially low, and hence a large oxidant stoichiometry should be used in order to avoid excessive water accumulation in the system and therefore cell flooding by liquid water. As the cell temperature increases, the oxidant stoichiometry decreases according to equation (4).

As has been described in detail supra, measurement/knowledge of the temperatures of each of the MEA fuel cell stack **2** and L/G separator **28** of a DMFC system such as system **10** are desirable for calculation of the oxidant (e.g., air) flow rate according to equation (4) above for obtaining a desired oxidant stoichiometric ratio. The present disclosure is based upon recognition that provision of a DOFC/DMFC system such as system **10** with regulation/control of these temperatures advantageously facilitates the air flow calculation and permits optimal power generation density, as well as optimal water recovery and fuel and space utilization, which are factors in obtaining optimal performance of DOFC/DMFC systems in portable and mobile applications such as notebook computers, etc. Accordingly, control of the MEA stack temperature and the liquid/gas (L/G) separator temperature for providing a desired oxidant stoichiometry, optimal power generation density, and optimal water recovery and fuel and space utilization are most desirable.

In essence, and as schematically illustrated in the drawing figures, DOFC/DMFC systems contemplated by the present disclosure comprise a plurality of generally planar MEA's arranged in a stacked structure, which stacked structure is provided with fuel and oxidant (air) intakes and a corresponding pair of fuel and oxidant (air) exhaust ports. The fuel and air exhaust ports are connected to a liquid/gas (L/G) separator for accumulation therein of unreacted fuel, e.g., "crossover" fuel such as liquid methanol (as described supra), and water produced by electrochemical reaction (e.g., as expressed by eq. (2)), which unreacted liquid fuel and recovered water are mixed together and re-supplied to the fuel cell stack. Gaseous products of the electrochemical reactions (e.g., $CO_2$ generated according to eq. (1)) are exhausted to the atmosphere. As a consequence, the DOFC/DMFC systems contemplated by the present disclosure advantageously provide self-contained, self-sustained operation affording efficient conversion of a highly concentrated fuel (e.g., methanol) into electricity for supply to a suitable load device.

Referring to FIG. 2, shown therein is a simplified perspective view of a portion of a DOFC/DMFC system according to an embodiment of the present disclosure, which view illustrates only those components of the system considered pertinent to an understanding of the embodiment, i.e., a plurality of generally planar MEA's arranged in a stacked structure, and including a fuel input flow channel, illustratively a serpentine channel, an end (or top) plate including a gas exhaust port at a first end, a L/G separator integrally formed with the MEA stack at a first end thereof and in vertical registry with the gas exhaust port of the top plate, a fuel intake at a second end of the MEA stack, and a pump connected to a pair of conduits fluidly connected to the L/G separator and the fuel intake for supplying a mixture of fuel (e.g., methanol) and liquid reaction product (e.g., recovered water) from the L/G separator to the fuel intake for re-use. The fuel exhaust and the oxidant (air) exhaust are fluidly connected to the L/G separator by structure not shown in the figure for simplicity's sake.

According to the embodiment, the L/G separator, which is integrally formed with the MEA fuel cell stack, is therefore thermally connected therewith and thus maintained at substantially the same temperature of the MEA stack during operation. For example, if the MEA stack temperature during operation is controlled/regulated to be about 60°C (e.g., due to heat generated by reaction and stack cooling by ambient, i.e., room temperature, air), the temperature of the L/G separator will be substantially the same at about 60°C, and this operating temperature will largely determine how much water is exhausted from the system as vapor rather than recovered in liquid form for re-use by mixing with the fuel (methanol). According to this embodiment, wherein the temperature of the L/G is fixedly determined by the MEA stack temperature, calculation of the air flow rate to obtain a desired oxidant stoichiometric ratio according to eq. (4) above is facilitated.

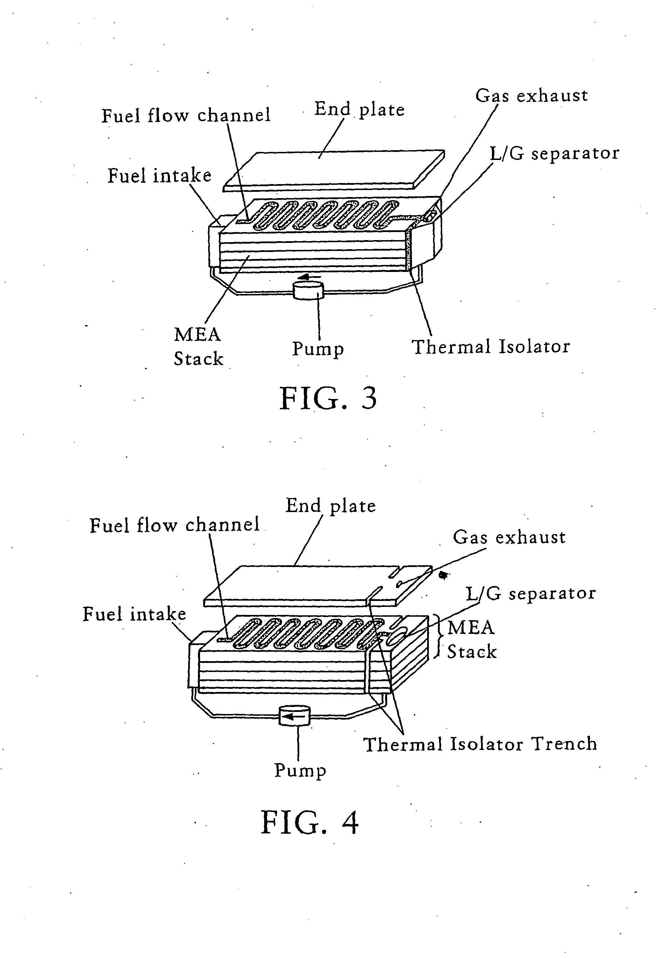

Adverting to FIG. 3, shown therein is a simplified perspective view of a portion of a DOFC/DMFC system according to another embodiment of the present disclosure, wherein the L/G separator is thermally isolated from the MEA stack, and consequently is regulated/controlled to be at a different (preferably lower) temperature than the MEA stack during operation of the DOFC/DMFC system. According to this embodiment, the L/G separator is mounted at a first end of the MEA stack via an intervening thermal isolator, e.g., formed of a poorly thermally conducting material, the end (or top) plate extends only to the first end of the MEA stack, and the gas exhaust is integral with the L/G separator.

By way of illustration only, according to this embodiment the temperature of the MEA stack during operation may be regulated/controlled at about 60°C, as by the heat generated by the fuel cell reactions and stack cooling by ambient air, and the temperature of the L/G separator will be somewhere intermediate the MEA stack temperature and the ambient (room) temperature, e.g., about 50°C. In practice, the difference between the MEA and L/G separator temperatures will be determined by the mechanical design and the thermal conductivity of the thermal isolation material. According to this embodiment, a pair of thermal sensors are provided for temperature measurement and regulation/control, i.e., a first sensor embedded is in the MEA stack and a second sensor is utilized for measuring the ambient (room) temperature. As a consequence, the L/G separator temperature can be estimated and $p/p_{sat}$ determined according to eq. (4).

Operation of a DOFC/DMFC fuel cell according to this embodiment, wherein the L/G separator is regulated/controlled to be at a lower temperature than the MEA stack, is advantageous in that: (1) a greater concentration of fuel (e.g., methanol) can be stored in the fuel cartridge (e.g., as indicated by reference numeral **18** in FIG. 1); and (2) the higher MEA stack temperature provides better power generation (i.e., current) efficiencies.

An alternative structure for achieving thermal isolation between the MEA stack and the L/G separator, hence different operating temperatures of the MEA stack and the L/G separator, is shown in FIG. 4. The latter is a simplified perspective view of a portion of a direct oxidation fuel cell system according to yet another embodiment of the present disclosure.

According to this embodiment, which is similar to that shown in FIG. 2, at least one slit or trench, preferably a pair of slits or trenches, is (are) formed in the MEA stack, which slit(s) or trench(es) with respective air space(s) act(s) as thermal isolator(s) between the major portion of the MEA stack and the minor portion of the MEA stack at one end thereof. The latter portion is integrally formed with the L/G separator. As in the embodiment shown in FIG. 3 and described above, this embodiment is capable of providing advantageous DOFC/DMFC operation wherein: (1) a greater concentration of fuel (e.g., methanol) can be stored in the fuel cartridge (e.g., as indicated by reference numeral **18** in FIG. 1) due to the lower L/G separator temperature; and (2) the increased power generation (i.e., current) efficiencies provided by the higher MEA stack temperature.

Still another approach for achieving different MEA stack and L/G separator temperatures according to the present disclosure is by utilizing a thermal design of the DOFC/DMFC system wherein higher and lower temperature zones exist in the system during operation. The lower temperature zone can be utilized for housing the L/G separator, and the higher temperature zone utilized for the MEA stack. The higher MEA stack temperature enhances fuel cell performance and significantly increases the power density of the MEA stack, whereas the L/G separator housed in the lower temperature zone limits the amount of water vapor exhausted from the system.

An example of a suitable design for such operation is a higher temperature MEA. stack zone operating at about 70°C and a lower temperature L/G separator zone at about 55°C. Such thermal design will also increase the average temperature of the MEA stack and automatically increase its thermal dissipation capability, thereby reducing the size (and power consumption) of any cooling fan which may be utilized for MEA stack temperature regulation.

In summary, the present disclosure provides structure and methodology for optimal operation of DOFC/DMFC systems, wherein regulation/control of MEA stack and L/G separator temperatures is utilized for facilitating control of the oxidant stoichiometry and affording optimum current generation with a minimized space requirement. In addition, the present disclosure provides several embodiments of systems wherein the MEA stack temperature is advantageously greater than the L/G separator temperature, whereby: (1) a greater concentration of fuel (e.g., methanol) can be stored in the fuel cartridge due to the lower L/G separator temperature; and (2) higher power generation (i.e., current) efficiencies are provided by the higher MEA stack temperature. Also, the amount of recovered water which is re-cycled back to the MEA assembly is readily controlled by means of a stack cooling fan. Finally, the present disclosure can be readily implemented on DOFC/DMFC systems by means of conventional techniques and methodologies.

In the previous description, numerous specific details are set forth, such as specific materials, structures, processes, etc., in order to provide a better understanding of the present disclosure. However, the present disclosure can be practiced without resorting to the details specifically set forth. In other instances, well-known processing materials and techniques have not been described in detail in order not to unnecessarily obscure the present disclosure.

Only the preferred embodiments of the present invention and but a few examples of its versatility are shown and described in the present disclosure. It is to be understood that the present disclosure is capable of use in various other combinations and environments and is susceptible of changes and/or modifications within the scope of the inventive concept as claimed in the enclosed claims.

**Claims**

**1.** A direct oxidation fuel cell (DOFC) system, comprising:

(a) at least one membrane-electrode assembly (MEA) including a cathode and an anode with a membrane electrolyte positioned therebetween, said MEA adapted for performing selected electrochemical reactions at said cathode and anode;
(b) a liquid/gas (L/G) separator in fluid communication with said cathode and anode for receiving unreacted fuel from said anode and liquid and gaseous products of said selected electrochemical reactions at said cathode and anode; and
(c) a thermal regulator for regulating the temperatures of each of said at least one MEA and said L/G separator,

said thermal regulator comprising structure for maintaining said at least one MEA at a highr temperature than said L/G separator, wherein:

said thermal regulator comprises a thermal isolator for maintaining said at least one MEA and said L/G separator in substantial thermal isolation,
and wherein said system comprises a plurality of MEA assemblies arranged in a stack, said L/G separator integrally formed with said stack, said thermal isolator comprising at least one slit or trench extending through a portion of said stack.

**2.** The system as in claim 1, further comprising:

(d) a fuel supply in fluid communication with said anode; and

(e) an oxidant supply in fluid communication with said cathode.

3. The system as in claim 2, wherein:

said fuel supply includes structure for supplying said unreacted fuel and said liquid product from said L/G separator to said anode.

4. The system as in claim 3, further comprising:

(f) a controller for regulating an oxidant stoichiometry ratio of said selected electrochemical reactions.

5. The system as in claim 1, wherein:

said L/G separator includes structure for exhausting at least one said gaseous product therefrom.

6. A method of operating a direct oxidation fuel cell (DOFC) system comprising at least one membrane-electrode assembly (MEA) including a cathode and an anode with a membrane electrolyte positioned therebetween, and a liquid/gas (L/G) separator in fluid communication with said cathode and anode for (1) receiving unreacted fuel from said anode and liquid and gaseous products of electrochemical reactions at said cathode and anode and (2) supplying said unreacted fuel and liquid product to said anode, comprising:

thermally regulating the temperatures of each of said at least one MEA and said L/G separator, using a direct oxidation fuel cell (DOFC) system as defined in any one of claims 1 to 5.

7. The method according to claim 6, comprising:

maintaining said at least one MEA at a higher temperature than said L/G separator.

8. The method according to claim 7, wherein:

the amount of liquid product recovered from said anode and cathode is controlled by the temperature of said at least one MEA.

9. The method according to claim 6, comprising:

providing a plurality of MEA assemblies in the form of a stack with said L/G separator housed in a portion of said stack, and developing a thermal gradient within said stack such that said portion of said stack housing said L/G separator is located in the lowest temperature zone of said stack.

**Patentansprüche**

1. Direktoxidations-Brennstoffzellen-(DOFC)-System, das Folgendes aufweist:

(a) mindestens eine Membran-Elektroden-Anordnung (MEA), die eine Kathode und eine Anode und einen dazwischen platzierten Membran-Elektrolyten umfasst, wobei die MEA zur Ausführung ausgewählter elektrochemischer Reaktionen an der Kathode und der Anode ausgelegt ist,
(b) einen Flüssigkeits-/Gas-(L/G)-Separator, der in Fluidverbindung mit der Kathode und der Anode ist, um nicht umgesetzten Brennstoff von der Anode und flüssige und gasförmige Produkte der ausgewählten elektrochemischen Reaktionen an der Kathode und der Anode zu erhalten,
(c) einen thermischen Regler zur Regulierung der Temperaturen sowohl der mindestens einen MEA als auch des L/G-Separators,

wobei der thermische Regler eine Struktur aufweist, um die mindestens eine MEA bei einer gegenüber dem L/G-Separator höheren Temperatur zu halten,
wobei der thermische Regler einen thermischen Isolierer aufweist, um eine wesentliche thermische Isolierung zwischen der mindestens einen MEA und dem L/G-Separator aufrechtzuerhalten,

und wobei das System mehrere MEA-Anordnungen aufweist, die in einem Stapel angeordnet sind, wobei der L/G-Separator integral mit dem Stapel ausgebildet ist, wobei der thermische Isolierer mindestens einen Schlitz oder Graben aufweist, der sich durch einen Abschnitt des Stapel erstreckt.

**2.** System nach Anspruch 1, das ferner Folgendes aufweist:

(d) eine Brennstoffzuführung, die in Fluidverbindung mit der Anode ist, und
(e) eine Oxidatorzuführung, die in Fluidverbindung mit der Kathode ist.

**3.** System nach Anspruch 2, bei dem die Brennstoffzuführung eine Struktur umfasst, um von dem L/G-Separator den nicht umgesetzten Brennstoff und das flüssige Produkt zu der Anode zuzuführen.

**4.** System nach Anspruch 3, das ferner Folgendes aufweist:

(f) eine Steuerung zur Regulierung eines stoichiometrischen Oxidator-Verhältnisses der ausgewählten elektrochemischen Reaktionen.

**5.** System nach Anspruch 1, bei dem der L/G-Separator eine Struktur aufweist, um mindestens eines der gasförmigen Produkte daraus abzusaugen.

**6.** Verfahren zum Betrieb eines Direktoxidations-Brennstoffzellen-(DOFC)-Systems, das mindestens eine Membran-Elektroden-Anordnung (MEA), die eine Kathode und eine Anode und einen dazwischen platzierten Membran-Elektrolyten umfasst, und einen Flüssigkeits-/Gas-(L/G)-Separator aufweist, der in Fluidverbindung mit der Kathode und der Anode ist, um erstens nicht umgesetzten Brennstoff von der Anode und flüssige und gasförmige Produkte elektrochemischer Reaktionen an der Kathode und der Anode zu erhalten und zweitens den nicht umgesetzten Brennstoff und das flüssige Produkt zu der Anode zuzuführen, mit folgendem Schritt:

die Temperaturen sowohl der mindestens einen MEA als auch des L/G-Separators werden unter Verwendung eines Direktoxidations-Brennstoffzellen-(DOFC)-Systems nach einem der Ansprüche 1 bis 5 thermisch reguliert.

**7.** Verfahren nach Anspruch 6, mit folgendem Schritt: die mindestens eine MEA wird bei einer gegenüber dem L/G-Separator höheren Temperatur gehalten.

**8.** Verfahren nach Anspruch 7, bei dem die Menge des von der Anode und der Kathode gewonnen flüssigen Produkts durch die Temperatur der mindestens einen MEA gesteuert wird.

**9.** Verfahren nach Anspruch 6, mit folgenden Schritten:

mehrere MEA-Anordnungen werden in Form eines Stapels bereitgestellt, wobei der L/G-Separator in einem Abschnitt des Stapels untergebracht wird, und
einen solchen thermischen Gradienten wird innerhalb des Stapels geschaffen, dass der Stapelabschnitt, in dem der L/G-Separator untergebracht ist, in der Niedrigsttemperaturzone des Stapels liegt.

**Revendications**

**1.** Système de pile à combustible à oxydation directe (DOFC - Direct Oxidation Fuel Cell), comprenant :

(a) au moins un ensemble membrane-électrode (MEA - Membrane-Electrode Assembly) comprenant une cathode et une anode avec une membrane électrolyte positionnée entre elles, ledit MEA étant conçu pour effectuer des réactions électrochimiques sélectionnées au niveau de ladite cathode et de ladite anode ;
(b) un séparateur liquide/gaz (L/G) en communication fluide avec ladite cathode et ladite anode pour recevoir un combustible n'ayant pas réagi de ladite anode et des produits liquides et gazeux desdites réactions électrochimiques au niveau de ladite cathode et de ladite anode ; et
(c) un régulateur thermique pour réguler les températures de chacun dudit au moins un MEA et dudit séparateur L/G,

ledit régulateur thermique comprenant une structure pour maintenir ledit au moins un MEA à une température plus élevée que ledit séparateur L/G, dans lequel :

ledit régulateur thermique comprend un isolateur thermique pour maintenir ledit au moins un MEA et ledit séparateur L/G dans une isolation thermique sensible,
et dans lequel ledit système comprend une pluralité d'ensembles MEA agencés dans une pile, ledit séparateur L/G étant formé d'un seul tenant avec ladite pile, ledit isolateur thermique comprenant au moins une fente ou un sillon s'étendant à travers une partie de ladite pile.

**2.** Système selon la revendication 1, comprenant en outre :

(d) une alimentation en combustible en communication fluide avec ladite anode ; et
(e) une alimentation en oxydant en communication fluide avec ladite cathode.

**3.** Système selon la revendication 2, dans lequel :

ladite alimentation en combustible comprend une structure pour fournir ledit combustible n'ayant pas réagi et ledit produit liquide à partir dudit séparateur L/G vers ladite anode.

**4.** Système selon la revendication 3, comprenant en outre :

(f) un contrôleur pour réguler un rapport stoechiométrique d'oxydant desdites réactions électrochimiques sélectionnées.

**5.** Système selon la revendication 1, dans lequel :

ledit séparateur L/G comprend une structure pour évacuer au moins un dit produit gazeux à partir de celui-ci.

**6.** Procédé d'utilisation d'un système de pile à combustible à oxydation directe (DOFC) comprenant au moins un ensemble membrane-électrode (MEA) comprenant une cathode et une anode avec une membrane électrolyte positionnée entre elles, et un séparateur liquide/gaz (L/G) en communication fluide avec ladite cathode et ladite anode pour (1) recevoir le combustible n'ayant pas réagi de ladite anode et les produits liquides et gazeux de réactions électrochimiques au niveau de ladite cathode et de ladite anode et (2) fournir ledit combustible n'ayant pas réagi et le produit liquide à ladite anode, consistant à :

réguler thermiquement les températures de chacun dudit au moins un MEA et dudit séparateur L/G, en utilisant un système de pile à combustible à oxydation directe (DOFC) tel que défini selon l'une quelconque des revendications 1 à 5.

**7.** Procédé selon la revendication 6, consistant à :

maintenir ledit au moins un MEA à une température plus élevée que ledit séparateur L/G.

**8.** Procédé selon la revendication 7, dans lequel :

la quantité de produit liquide récupérée à partir de ladite anode et de ladite cathode est contrôlée par la température dudit au moins un MEA.

**9.** Procédé selon la revendication 6, consistant à :

fournir une pluralité d'ensembles MEA sous la forme d'une pile avec ledit séparateur L/G logé dans une partie de ladite pile, et développer un gradient thermique à l'intérieur de ladite pile de telle sorte que ladite partie de ladite pile logeant ledit séparateur L/G se trouve dans la zone de température la plus basse de ladite pile.

FIG. 1

FIG. 2

Fuel flow channel   End plate   Gas exhaust

L/G separator

Fuel intake

MEA
Stack   Pump   Thermal Isolator

## FIG. 3

Fuel flow channel   End plate

Gas exhaust

L/G separator

Fuel intake   { MEA
} Stack

Pump   Thermal Isolator Trench

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5599638 A
- US 20050008924 A1
- US 20050208352 A1
- DE 19701560 C2
- WO 2005096420 A2
- US 02030604 A

**Non-patent literature cited in the description**

- **REN ; PASAOGULLARI ; WANG et al.** *J. Electrochem. Soc.,* March 2004, A399-A406